Europäisches Patentamt

European Patent Office

Office européen des brevets

(19)

(11) Numéro de publication: **0 242 250**
**B1**

(12) **FASCICULE DE BREVET EUROPEEN**

(45) Date de publication du fascicule du brevet: **16.01.91**

(51) Int. Cl.⁵: **G 01 D 5/34**

(21) Numéro de dépôt: **87400572.1**

(22) Date de dépôt: **13.03.87**

(54) **Dispositif de détection opto-électronique à distance d'une grandeur physique.**

(30) Priorité: **13.03.86 FR 8603598**

(43) Date de publication de la demande:
**21.10.87 Bulletin 87/43**

(45) Mention de la délivrance du brevet:
**16.01.91 Bulletin 91/03**

(84) Etats contractants désignés:
**AT BE CH DE ES FR GB GR IT LI LU NL SE**

(56) Documents cités:
**FR-A-2 340 540**
**FR-A-2 553 878**
**FR-A-2 569 001**

**OPTICS LETTERS, vol. 11, no. 8, aou7t 1986,
pages 543-545, Optical Society of America, New
York, US; Ph. DABKIEWICZ et al.: "Fiber-optic
angular sensor with interleaved channel
spectra"**

(73) Titulaire: **BERTIN & CIE**
**Zone Industrielle Boîte postale 3 -
F-78373 Plaisir Cédex (FR)**

(72) Inventeur: **Lequime, Michel René
6 rue des Sauries
F-13510 Eguilles (FR)**

(74) Mandataire: **Ramey, Daniel
Cabinet Ores 6 Avenue de Messine
F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention concerne un dispositif de détection opto-électronique à distance d'une grandeur physique, comprenant une source de lumière incohérente reliée par fibre optique à un capteur à codage de modulation spectrale, lui-même relié par fibre optique à des moyens d'analyse spectrale de la lumière issue du capteur.

Pour mesurer un déplacement par voie optique avec une grande précision, il est connu d'utiliser un interféromètre de Michelson éclairé en lumière monochromatique (laser hélium-néon) et un système électronique de comptage de franges. Cet appareillage présente l'inconvénient de ne donner accès qu'à des mesures de déplacement, et non de position. Pour connaître la position d'un objet, il faut donc suivre tous ses déplacements depuis son point de départ jusqu'à son point d'arrivée. L'interruption du faisceau lumineux conduit à une perte complète de l'origine, et ôte donc toute valeur à la mesure.

Il a été montré que le remplacement de la source monochromatique cohérente par une source polychromatique incohérente permettait de remédier à cet inconvénient (article de Bosselmann, Ulrich et Arditty, "Capteur de déplacement à interféromètres couplés par fibres multimodales", Opto 85, 21/23 mai 1985). Le dispositif décrit dans cet article utilise pour la détection un deuxième interféromètre de Michelson, dont la différence de marche est rendue variable par déplacement d'un miroir. La mesure consiste donc à accorder l'interféromètre de détection autour de la différence de la marche nulle (pic de corrélation d'ordre 0), puis à faire varier la position du miroir mobile jusqu'à ce que la différence de marche dans le détecteur soit comparable en valeur absolue à celle enregistrée par le capteur (pics de corrélation d'ordre plus ou moins 1).

Si l'on veut conserver toute la précision de la méthode, il est nécessaire de mesurer la position du miroir mobile avec une très grande précision. Dans l'article cité, ceci est réalisé en utilisant au niveau du détecteur un laser hélium-néon fonctionnant en dispositif de comptage de franges. Cette méthode présente l'inconvénient de réintroduire au niveau de la détection les limitations liées à l'emploi d'une source monochromatique (caractère relatif de la mesure).

De plus, les dispositifs interférométriques utilisant une division spatiale du front d'onde tels qu'un interféromètre de Michelson, sont d'une réalisation délicate, en particulier en lumière polychromatique: ils imposent en effet des tolérances de fabrication, des stabilités et une qualité optique très contraignantes.

L'emploi d'un tel système pour la partie capteur du dispositif ne se justifie que dans le cas particulier des mesures de déplacement. Ce système n'est pas approprié à la mesure d'autres grandeurs physiques, telles que la température, le champ magnétique, la tension électrique, car il est difficile de s'affranchir des effets parasites liés à la structure du capteur ou aux dépendances croisées entre les grandeurs (cas de la température et du champ magnétique par exemple).

Il est également connu, par le brevet français n° 2 436 976 de mesurer à distance une température au moyen d'un dispositif opto-électronique comprenant une source de lumière incohérente reliée par une fibre optique à un capteur comprenant un élément biréfringent sensible à la grandeur physique à mesurer, et des moyens d'analyse du signal lumineux issu du capteur, permettant de transformer ce signal en un signal lumineux dont l'intensité est fonction sinusoïdale du temps et dont les pics sont espacés d'un intervalle de temps qui est fonction de la température détectée. Ce signal lumineux est transformé par une photodiode en un signal électrique qui est débarrassé de sa composante continue et transformé en une onde carrée, dont on mesure la période qui est représentative de la température détectée. Pour obtenir une précision correcte, il faut utiliser deux compteurs permettant de réaliser la mesure sur un nombre prédéterminé de périodes.

Ce dispositif connu présente l'inconvénient essentiel de ne pouvoir fonctionner qu'avec un seul capteur et donc de ne permettre la mesure d'une température qu'en un point déterminé, si l'on ne veut utiliser qu'une ligne optique de liaison.

L'un des buts de l'invention est d'éviter les inconvénients des divers dispositifs connus.

Elle a pour objet un dispositif de détection à distance d'une grandeur physique, qui soit à la fois simple, stable, peu encombrant, de fabrication aisée et de grande bande passante.

Elle a également pour objet un dispositif de ce type qui permette la mesure d'une grandeur physique en des points différents, par multiplexage de capteurs interférométriques biréfringents utilisant le codage par modulation spectrale.

Elle propose donc un dispositif de détection opto-électronique à distance d'une grandeur physique, comprenant une source de lumière incohérente reliée par une fibre optique d'émission à un capteur du type interférométrique à milieu actif biréfringent soumis à la grandeur à détecter et dans lequel la lumière subit une modulation périodique ou quasi-périodique de son spectre, et une fibre optique de réception reliant le capteur à des moyens d'analyse spectrale de la lumière issue du capteur, caractérisé en ce que la différence de marche introduite dans le capteur entre les ondes qui interfèrent est supérieure à la longueur de cohérence de la source de lumière, et en ce que les moyens d'analyse spectrale comprennent un système de démodulation optique statique essentiellement constitué d'un ensemble d'éléments biréfringents placés entre un polariseur et un analyseur croisés ou parallèles, permettant d'obtenir un gradient de biréfringence le long d'une direction optique privilégiée, un détecteur linéaire multipoints à éléments photosensibles, orienté parallèlement à cette direction optique, et des circuits électroniques d'acquisition et de traitement des signaux produits par le détecteur.

Le dispositif selon l'invention présente l'avantage de réaliser, de façon entièrement statique et par voie optique, une démodulation, par transformation de Fourier du flux lumineux issu du capteur. On obtient ainsi trois réponses d'extension spatiale inversement proportionnelle à la largeur spectrale de la source de lumière, qui sont centrées sur les différences de marche 0,+d,−d. La position de la réponse O n'est reliée qu'au fonctionnement instantané du système de démodulation et permet de déterminer le zéro de la détection, tandis que la position relative de la réponse latérale +d ou −d permet de remonter à la différence de marche instantanée dans le capteur et donc à la valeur de la grandeur physique à mesurer. Le dispositif selon l'invention, qui permet d'obtenir en une seule fois la totalité du pic de corrélation d'ordre +ou −1, se caractérisé par sa simplicité et par une grande précision de mesure.

Selon une autre caractéristique de l'invention, l'ensemble d'éléments biréfringents du système de démodulation comprend un prisme de Wollaston, constitué de deux prismes élémentaires biréfringents accolés le long d'une face inclinée par rapport à la direction privilégiée précitée et disposés de manière croisée, et une lame de matière biréfringente identique à celle du capteur de modulation, et qui est placée entre le polariseur et le prisme de Wollaston.

De cette façon, la différence de marche dans le système de démodulation est comparable à la différence de marche dans le capteur, et le détecteur linéaire multipoints permet d'enregistrer, de façon statique, la forme et la position de la réponse latérale +d, permettant de remonter de façon entièrement statique à la valeur de la grandeur à mesurer.

En variante, le système de démodulation peut comprendre un prisme de Wollaston modifié (de type Nomarski), dans lequel l'un des prismes élémentaires est taillé avec un axe incliné par rapport à sa face d'entrée, ce qui permet d'obtenir un champ de franges d'interférence rectiligne localisé à l'extérieur du prisme de Wollaston, sur le détecteur linéaire. On évite ainsi d'utiliser une optique de reprise entre l'analyseur et le détecteur.

Selon une autre variante, les deux prismes élémentaires sont d'orientation identique et séparés par une lame demi-onde, ce qui permet d'obtenir un dispositif à grand champ, autorisant l'utilisation d'optiques de collimation à courte focale.

Selon une autre caractéristique de l'invention, un dispositif de modulation de phase est interposé, dans le système de démodulation, entre le polariseur et la lame biréfringente suivie par le prisme de Wollaston. Un tel dispositif permet de mesurer la phase absolue du signal en tout point et d'obtenir une précision extrêmement elevée sur la mesure de la grandeur physique. Ce dispositif de modulation de phase peut comprendre une lame demi-onde tournante suivie d'une lame quart d'onde fixe, ou bien un ensemble de n lames déphasantes d'incrément 2π/n, et des moyens pour faire défiler ces lames l'une après l'autre entre le polariseur et la lame biréfringente du système de démodulation.

Selon une autre caractéristique de l'invention, le dispositif comprend plusieurs capteurs à codage de modulation reliés par des fibres optiques au même système de démodulation optique et multiplexés par la différence de marche optique qu'ils procurent et un ensemble de lames biréfringentes identiques à celles des capteurs, placé dans le système de démodulation entre le polariseur et l'ensemble à gradient de biréfringence et associé à des moyens pour faire défiler les lames l'une après l'autre entre le polariseur et ledit ensemble.

Ce dispositif permet de réaliser de façon statique, pour chaque capteur, la démodulation du signal issu du capteur et la mesure de la valeur de la grandeur physique au point où est situé le capteur.

Quant à la source de lumière utilisée, elle peut être constituée par une lampe à filament dans le cas où il est souhaitable de disposer d'une largeur spectrale importante, ou une diode électroluminescente lorsqu'il est souhaitable de disposer d'une source de largeur spectrale plus faible ou encore par la superposition de plusieurs diodes électroluminescentes de longueurs d'onde centrale différentes, associées à des moyens de réglage des courants d'alimentation des diodes, si l'on souhaite disposer d'une source de largeur spectrale modulable.

L'invention sera mieux comprise et d'autres caractéristiques, détails et avantages de celle-ci apparaîtront à la lecture de la description explicative qui va suivre, faite en référence aux dessins annexés, dans lesquels:

— la figure 1 A représente schematiquement, sous forme de blocs un dispositif selon l'invention;

— la figure 1 B illustre schématiquement le principe de fonctionnement d'un capteur à codage de modulation spectrale;

— la figure 2 représente une forme de réalisation d'un capteur à codage de modulation spectrale;

— la figure 3 représente une première forme de réalisation d'un système de démodulation selon l'invention;

— les figures 4, 5 et 6 représentent des variantes de réalisation du prisme à gradient de biréfringence du système de démodulation;

— les figures 7A et 7b sont des courbes représentant schématiquement la forme des signaux de corrélation obtenus pour deux sources de lumières incohérentes de types différents;

— la figure 8 représente schématiquement un dispositif de modulation de phase utilisé dans le système de démodulation selon l'invention;

— la figure 9A représente schématiquement un disque portant une série de lames d'accord permettant l'interrogation de plusieurs capteurs à codage de modulation spectrale;

— les figures 9B et 9C représentent schématiquement des variantes de réalisation de ces lames d'accord;

— la figure 10 est un graphe représentant la densité spectrale relative de plusieurs diodes électroluminescentes, en fonction de la longueur d'onde.

Les dessins annexés comprennent des informations de caractère certain et sont donc annexés à la description, non seulement pour permettre de mieux comprendre celle-ci, mais aussi pour contribuer le cas échéant à la définition de l'invention.

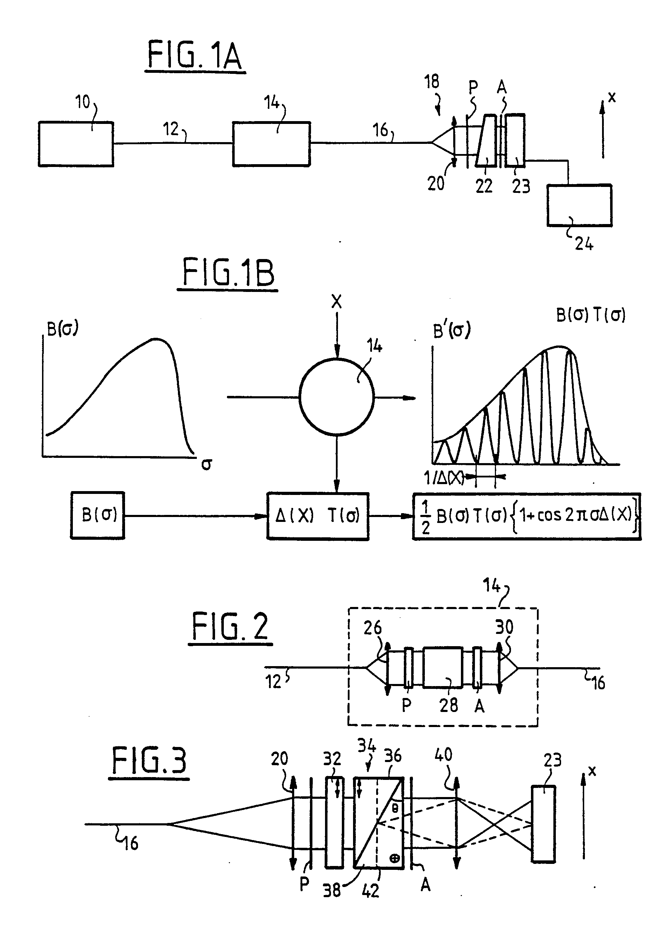

On se réfère d'abord aux figures 1 à 3, pour expliquer les caractéristiques essentielles et le principe général de fonctionnement du dispositif selon l'invention.

Ce dispositif représenté en figure 1A comprend une source 10 de lumière incohérente, telle qu'une lampe à filament, une diode électroluminescente, ou un ensemble de diodes électroluminescentes, qui est reliée par une fibre optique d'émission 12 à un capteur 14 à codage de modulation spectrale, soumis à la grandeur physique à mesurer. Ce capteur 14 est relié par une fibre optique de réception 16 à un système 18 de démodulation statique, comprenant successivement une optique de collimation 20 au foyer de laquelle est placée l'extrémité de la fibre de réception 16, et qui produit un faisceau de lumière parallèle traversant un polariseur P pour venir attaquer un prisme 22 permettant d'obtenir un gradient de biréfringence le long d'une direction optique x privilégiée, un analyseur A étant placé entre le prisme 22 et un détecteur linéaire multipoints 23 constitué par une série d'éléments photosensibles rangés en ligne parallèlement à la direction x. Le polariseur P et l'analyseur A ont des orientations relatives parallèles ou perpendiculaires et inclinées à 45° par rapport à la direction x. La ou les sorties du détecteur 23 sont reliées à un ensemble de circuits électroniques 24 d'acquisition et de traitement de signaux produits par le détecteur.

La structure du capteur 14 à codage de modulation spectrale est représentée en figure 2. Ce capteur comprend une optique de collimation 26 au foyer de laquelle est placée l'extrémité de la fibre d'émission 12 et qui produit un faisceau de lumière parallèle attaquant, par l'intermédiaire d'un polariseur P, une lame 28 de matière biréfringente uniaxe, qui est taillée parallèlement à son axe et dont la biréfringence est fonction de la grandeur à mesurer. La lumière transmise par la lame biréfringente 28 est reprise par un analyseur A, puis par une optique de sortie 30, qui l'applique à l'extrémité de la fibre de réception 16.

La lame biréfringente 28, dont l'épaisseur est e, est caractérisée par un axe lent d'indice n L et un axe rapide d'indice n R. La direction de polarisation fait un angle de 45° avec l'axe lent et l'ensemble polariseur-analyseur est disposé en configuration croisée ou parallèle. Le flux lumineux transmis par le capteur 14 présente, du fait des phénomènes d'interférence entre les deux états de polarisation de la lumière, une modulation spectrale, pour autant que la différence de marche $\Delta$ qu'il procure soit supérieure à la longueur de cohérence de la source lumineuse 10 utilisée, $\Delta$ étant donné par la relation suivante:

$$\Delta = e(nL - nR) = e(X)[nL(\sigma, x) - nR(\sigma, x)]$$

où X est la grandeur physique à mesurer, et $\sigma$ est le nombre d'onde.

Le fonctionnement du capteur 14 est illustré de façon schématique par la figure 1B. Dans cette figure B ($\sigma$) représente le spectre du signal incident sur le capteur, qui est également soumis à la grandeur X à mesurer. Le capteur 14 est un dispositif interférométrique à deux ondes, qui permet d'introduire entre ses deux ondes une différence de marche fonction de la grandeur X à mesurer. Le capteur 14 transmet donc un spectre d'enveloppe B($\sigma$) T($\sigma$) où T($\sigma$) désigne la transmission du capteur, à laquelle s'ajoute une modulation périodique sinusoïdale de fréquence $\Delta(X)$. Le flux lumineux transmis par le capteur est exprimé par la relation suivante:

$$B'(\sigma, X) = 1/2 \, B(\sigma) \, T(\sigma)[1 + \cos 2\pi\sigma\Delta(X)]$$

Ce flux lumineux est transmis par la fibre 16 au système 18 de démodulation statique qui réalise une transformation de Fourier par voie optique de ce flux. Si l'on pose:

$$F(\sigma) = 1/2 \, B(\sigma) \, T(\sigma).$$

Le flux à la sortie du système de démodulation a pour expression:

$$I(D) = 1/4[\tilde{F}(0) + \tilde{F}(D) + 1/2\tilde{F}(D - \Delta) + 1/2\tilde{F}(D + \Delta)]$$

où F (D) désigne la transformée de Fourier cosinus du terme F($\sigma$), et D est la différence de marche dans le système de démodulation.

On obtient ainsi trois réponses d'extension spatiale inversement proportionnelle à la largeur spectrale de la source de lumière, qui sont centrées sur les différences de marche 0, $+\Delta$, $-\Delta$.

La position de la réponse 0 est reliée uniquement au fonctionnement instantané du module de détection. Les positions relatives des réponses latérales $+\Delta$ et $-\Delta$ permettent de remonter à la différence de marche instantanée dans le capteur 14 et donc à la valeur de la grandeur physique X.

Les fibres optiques 12 et 16 sont en principe des fibres multimodes à saut d'indice ou à gradient d'indice. Il est toutefois envisageable d'utiliser une fibre monomode, en particulier si la source de lumière 10 est une diode électroluminescente ou superluminescente.

Selon le mode de fonctionnement du capteur 14 (fonctionnement en transmission ou par réflexion, les fibres 12 et 16 seront soit distinctes (comme représenté dans les figures 1A et 2), soit en partie confondues, la fibre 16 de réception se séparant de la fibre 12 d'émission au moyen d'un coupleur en Y pour être reliée au système de démodulation. Dans ce système, le détecteur multipoints 23 peut être constitué, par exemple, par un assemblage linéaire de photodiodes à sorties indépendantes (photodiodes PIN ou à avalanche), soit par un réseau de photodiodes du type CCD fournissant une sortie video commune.

La figure 3 représente schématiquement une forme de réalisation préférée du système de démodulation statique selon l'invention. Dans cette forme de réalisation, la fibre optique 16 de réception est couplée par l'optique de collimation 20 au polariseur P, qui est suivi d'une lame d'accord 32 en matière biréfringente strictement identique, du point de vue de la constitution et de l'épaisseur, à la lame 28 du capteur 14. Cette lame d'accord 32 est suivie d'un prisme 34 de type Wollaston, qui est constitué de deux prismes élémentaires accolés 36 et 38, réunis sur une face oblique faisant un angle θ avec la direction optique privilégiée x, ces deux prismes étant biréfringents et disposés de manière croisée, c'est-à-dire que l'axe lent du prisme 36 est confondu avec l'axe rapide du prisme 38. Au centre du champ (x=0), les épaisseurs de ces deux prismes sont égales. L'axe lent de la lame d'accord 32 a la même orientation que l'axe lent du prisme 36. L'analyseur A placé derrière le prisme 34 est suivi d'une optique de reprise 40 permettant d'appliquer sur le détecteur 23 la lumière transmise par le prisme 34. La direction de polarisation fait un angle de 45° avec les axes neutres de la lame d'accord 32 et, comme précédemment indiqué, l'ensemble polariseur-analyseur est disposé en configuration croisée ou parallèle.

La différence de marche D introduite par ce système de démodulation est donnée par la relation suivante:

$$D(x)=(nL-nR)(e+2x\ tg\theta)$$

et varie donc linéairement en fonction de x (e étant l'épaisseur de la lame d'accord 32).

On voit donc que cette différence de marche D est nulle au centre du champ (x=0) lorsque la lame d'accord 32 est retirée du système de démodulation. De cette façon, il est possible d'enregistrer à l'aide du détecteur multipoints 23 la forme et la position de la réponse centrale 0, pour obtenir le zéro de la détection. Par ailleurs, lorsque la lame d'accord 32 est identique à la lame 28 du capteur 14, la différence de marche D au centre du champ est comparable à la différence de marche dans le capteur 14. Dans ces conditions, on peut enregistrer, de façon statique au moyen du détecteur multipoints 23, la forme et la position de la réponse latérale +Δ. Cette position, notée $x_1$, est telle que:

$$\Delta(X)=D(x_1)\ d'où\ x_1=1/k[\Delta(X)-D(0)]$$

Si D(0) est connu et stable, la mesure par le détecteur multipoints 23 de la valeur de $x_1$ permet de remonter à la valeur de la grandeur X, et cela de façon entièrement statique.

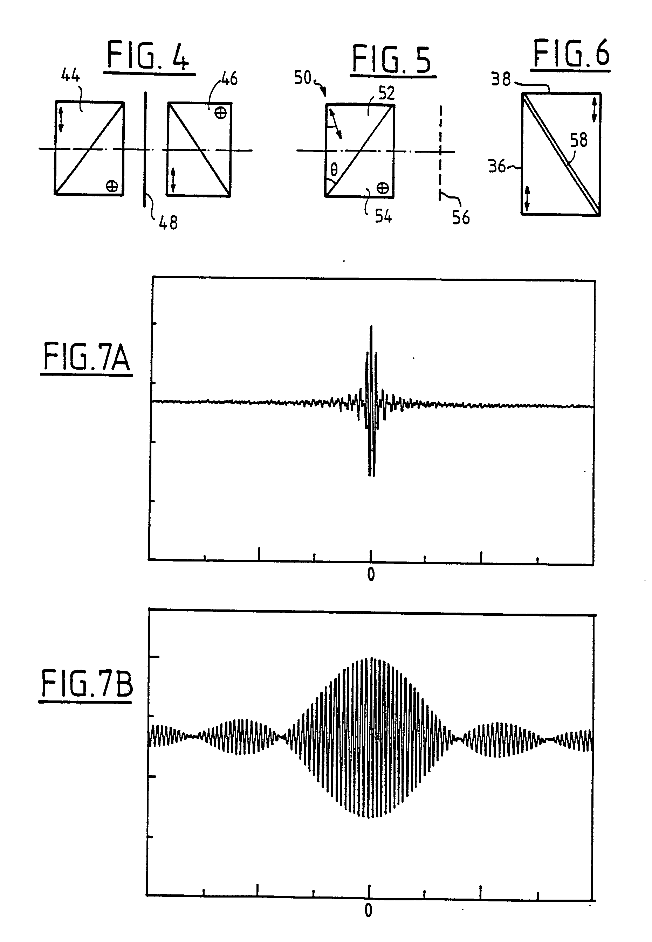

Dans le système de démodulation statique de la figure 3, les franges d'interférence obtenues sont des droites équidistantes parallèles à l'arête des prismes 36 et 38, et sont localisées à l'intérieur du prisme 34, la surface de localisation 42 étant un plan incliné de 2θ/3 par rapport aux faces extérieures. L'optique de reprise 40 permet de former une image de ce champ sur le détecteur multipoints 23. Toutefois, dans certains cas, l'inclinaison de la surface de localisation 42 peut être la source de difficultés. On peut s'en affranchir en remplaçant le prisme unique 34 par un ensemble de deux prismes 44 et 46 (figure 4) qui sont disposés symétriquement par rapport à une lame demi-onde 48, le prisme 44 étant identique au prisme 34 de la figure 3. La surface de localisation des franges d'interférence est alors un plan parallèle aux faces des prismes 44 et 47. Il faut cependant que la lame demi-onde 48 soit achromatique sur la totalité de la largeur spectrale de la source de lumière 10, ce qui incite à utiliser dans ce cas des diodes électroluminescentes.

La figure 5 représente une autre forme de réalisation du prisme 34 à gradient à biréfringence de la figure 3. Dans cette forme de réalisation, le prisme est désigné de façon générale par la référence 50 et comprend, comme le prisme 34, deux prismes élémentaires 52 et 54 réunis le long d'une face oblique faisant un angle θ avec la direction x, l'un 52 de ces prismes élémentaires étant taillé avec un axe incliné d'un angle ε par rapport à sa face d'entrée. Dans ce cas, le plan 56 de localisation de franges d'interférence est situé à l'extérieur du prisme 50 et peut être amené en coincidence avec la ligne des éléments photosensibles du détecteur multipoints 23, sans qu'il soit nécessaire d'utiliser une optique de reprise.

Une autre variante de réalisation du prisme à gradient de biréfringence est représentée en figure 6. Dans cette variante, les deux prismes élémentaires 36 et 38 sont d'orientation identique et sont séparés par une lame demi-onde 58. Ce montage permet d'obtenir un dispositif à grand champ, autorisant l'utilisation d'optiques de collimation à courte focale.

L'allure des signaux obtenus en sortie du système de démodulation est représenté dans les figures 7A et 7B pour deux types différents de source de lumière présentant une densité spectrale uniforme sur une bande de largeur Δλ de longueur d'onde centrale λ0. Le signal de la figure 7A correspond à une source de lumière de largeur spectrale importante, du type lampe à filament, pour laquelle λ0 est par exemple de 800 nm et le rapport $\lambda_0/\Delta\lambda$ est égal à 2. Le signal de la figure 7B correspond à un source de lumière de largeur spectrale plus faible, par exemple une diode électroluminescente pour laquelle la longueur d'onde centrale $\lambda 0$ est égale à 800 nm, et le rapport $\lambda 0/\Delta\lambda$ est égal à 20. La fonction correspondante aux courbes des figures 7A et 7B s'exprime de la façon suivante:

$$I(u)=I_0[1+1/2 \cos 2\pi u \frac{\sin (\pi u/f)}{\pi u/f}]$$

avec

$$u\lambda_o=D-\Delta$$

et

$$f=\lambda_o/\Delta\lambda$$

La mesure de la grandeur physique X est réalisée par détermination précise de la position du point $u=0$ sur le détecteur 23. Pour une source de lumière de largeur centrale importante, cela revient à identifier la position du maximum de la courbe 7A, ce qui est simple à réaliser compte tenu de la forme particulièrement étroite du pic de corrélation.

Lorsque la source de lumière a une largeur spectrale plus faible (courbe de la figure 7B), cette détermination est plus délicate. Il est possible d'éviter cette difficulté par une mesure de la phase absolue du signal en tout point, et en utilisant comme paramètre de mesure:

— soit la phase absolue du signal en un point fixe du détecteur 23, l'origine des phases étant choisie au maximum du pic de corrélation,

— soit la position instantanée du point de phase nulle.

Cette mesure de phase est rendue possible par la valeur élevée du paramètre de finesse f. En effet, sur une alternance de la modulation, la variation d'amplitude de l'enveloppe de la courbe de la figure 7B n'excède par 3%, ce qui est négligable en première approximation, et peut être compensé, en deuxième approximation, par une hypothèse de variation linéaire.

La mesure de phase peut être réalisée de différentes façons, par exemple par:

a) analyse directe du signal complet enregistré par le détecteur 23: dans ce cas, différents photodétecteurs élémentaires du détecteur 23 participent à la mesure en chaque point, ce qui permet, par un procédé du type sous-échantillonnage, de déterminer la phase à l'origine de la détection.

b) inteférométrie à saut de phase, qui consiste à enregistrer successivement n répartitions d'intensité correspondant au même pic de corrélation déplacé de $2\pi/n$.

Pour n égal 4, on obtient par exemple, en un point u donné du champ de franges, la succession de relations indiquées ci-dessous:

$$I_0(u)=I_0[(1+1/2 \cos 2\pi u \sin (\pi u/f)/(\pi u/f)]$$

$$I_1(u)=I_0(u+1/4)\sim I_0[1+1/2 \sin 2\pi u \cdot \sin (\pi u/f)/(\pi u/f)]$$

$$I_2(u)=I_0(u+1/2)\sim I_0[1-1/2 \cos 2\pi u \cdot \sin (\pi u/f)/(\pi u/f)]$$

$$I_3(u)=I_0(u+3/4)\sim I_0[1-1/2 \sin 2 \pi u \cdot \sin (\pi u/f)/(\pi u/f)]$$

$$(I_1-I_3)^2+(I_0-I_2)^2= \left[ \frac{\sin (\pi u/f)}{\pi u/f} \right]^2 =F(u)$$

$$2\pi u=\text{Arctg}(I_1-I_3)/(I_0-I_2)=\phi(u)$$

Par calcul, on peut déterminer la position $u_0$ à l'intérieur du champ de franges où se trouvent réalisées simultanément les deux conditions suivantes:

$F(u_0)$ est maximum, et $\phi(u_0)$ est un multiple de $2\pi$.

Si les mesures d'enveloppe F(u) ont suffisamment de précision, la position $u_0$ est unique et définit le centre du pic de corrélation $D=\Delta$.

c) interférométrie à balayage de phase, qui consiste à enregistrer les signaux résultant d'une variation linéaire de phase de $2\pi$:

— soit en les intégrant par intervalle $2\pi/n$, au moyen d'un détecteur multipoints 23 de type integrateur (cellules CCD à transfert de charge);

— soit en les analysant temporellement au moyen d'un réseau de photodiodes à sorties individuelles fonctionnant en mode suiveur.

Le procédé a) présente l'avantage majeur d'être entièrement statique. Par contre, il suppose que les caractéristiques opto-électroniques de chaque détecteur élémentaire soient stables et connus.

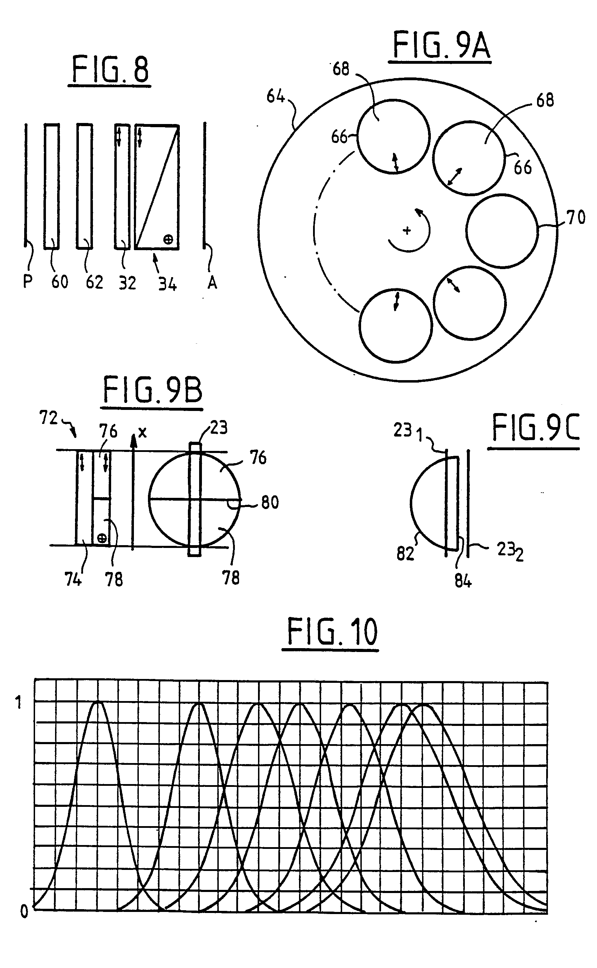

Le procédé b) est réalisé par interposition devant le prisme à gradient de biréfringence du système de démodulation, d'un jeu de n lames déphasantes (n étant supérieur ou égal à 3) de mêmes axes et de constitution analogue. Cette interposition est obtenue simplement par un mouvement de translation, ou par un mouvement de rotation, par exemple lorsque les lames sont montées dans des logements d'un disque rotatif, tel par exemple que le disque représenté schématiquement en figure 9A.

Il existe de nombreuses méthodes de mise en oeuvre du procédé c. La figure 8 représente schématiquement un mode de réalisation préféré de mise en oeuvre de ce procédé, qui a été décrit par A. Robert et C. Cinotti dans l'article "Application du birefringent tournant à une nouvelle méthode de Moiré", Opto 80, 30 septembre—2 octobre 1980. Ce dispositif comprend une lame demi-onde 60 tournant autour de l'axe optique du système et une lame quart d'onde 62 fixe, qui sont interposées entre le polariseur P et la lame d'accord 32 du système de démodulation de la figure 3, l'un des axes de la lame quart d'onde 62 étant confondu avec la direction de polarisation définie par le polariseur P. Si l'on utilise un détecteur multipoints 23 de type intégrateur, il est nécessaire que le temps d'integration T satisfasse à la relation:

$n\Omega T = 2\pi$, n étant un entier, $\Omega$ étant la pulsation constante du mouvement de rotation de la lame 60, ce qui permet de retrouver un formalisme semblable à celui du procédé b.

Selon une autre caractéristique importante de l'invention, les capteurs 14 à codage de modulation spectrale qui sont par nature des dispositifs multiplexables, peuvent être interrogés par le même système de démodulation. Pour cela, il suffit de commuter, en amont du prisme à gradient de biréfringence, différentes lames biréfringentes correspondant à celles qui sont utilisées dans les différents capteurs. Le détecteur multipoints 23 est à même d'enregistrer successivement les pics de corrélation d'ordre+1 associés aux différents capteurs, d'en déduire les positions correspondantes $x_1$, et donc les valeurs instantanées des grandeurs physiques X aux emplacements des différents capteurs.

Pour ce multiplexage, on peut utiliser l'un ou l'autre des dispositifs représentés schématiquement dans les figures 9A, 9B et 9C.

Le dispositif de la figure 9A comprend un disque 64 qui est monté à rotation autour d'un axe parallèle à l'axe optique du système de démodulation et qui comprend n logements 66 dans chacun desquels est placé une lame biréfringente 68 équivalente à celle d'un des capteurs à codage de modulation spectrale, et un logement supplémentaire 70, laissé vide. Ce dernier permet d'enregistrer à l'intervalles réguliers la forme et la position du pic de corrélation central, pour recaler en permanence le zéro de la détection.

La figure 9B représente une variante de réalisation, dans laquelle chaque lame biréfringente 68 d'un logement 66 du disque 64 est remplacée par une lame 72 à champ partagé qui permet d'obtenir simultanément sur le détecteur des deux pics de corrélation 0, +1 significatifs de la mesure. Cette lame 72 à champ partagé est constituée par exemple par une lame circulaire 74 ayant une épaisseur e/2, une lame complémentaire 76 semicirculaire d'épaisseur e/2 et ayant la même orientation que la lame 74 (leurs axes lents étant confondus), et une lame anticomplémentaire 78 semicirculaire, d'épaisseur e/2 et dont l'axe lent est confondu avec l'axe rapide de la lame 74. Les deux lames semi-circulaires 76 et 78 sont réunies le long de leur bord diamètral 80, qui est perpendiculaire à la direction x du détecteur 23, lorsque la lame à champ partagé 72 est en position de service. De cette façon, l'épaisseur totale de la lame à champ partagé 72 est égale à e au niveau de la lame complémentaire 76 et à 0 au niveau de la lame anticomplémentaire 78.

La figure 9C représente une autre variante de réalisation, dans laquelle chaque logement 66 du disque 64 reçoit une lame d'accord 82 de forme semicirculaire, de sorte que la moitié de chaque logement 66 est laissée vide, le bord diamètral 84 de cette lame étant parallèle à la direction x en position de service. On obtient ainsi deux demi champs de franges d'interférence, que l'on analyse au moyen de deux détecteurs linéaires multipoints $23_1$ et $23_2$, qui sont placés jointifs, soit par des procédés optiques, au moyen par exemple d'un cube séparateur de faisceaux, soit par des procédés mécaniques, par exemple au moyen d'un détecteur bitrace à deux lignes de détecteurs superposées.

On pourrait bien entendu utiliser, à la place du disque 64 de la figure 9A, une barrette rectiligne déplacable en translation et dans laquelles les logements des différentes lames sont alignés.

Par ailleurs, il peut également être avantageux, selon l'invention, de disposer d'une source de lumière incohérente ayant une largeur spectrale modulable, qui permettrait de conserver les avantages de simplicité et de caractère absolu de la détection d'amplitude appliquée aux signaux du type de la figure 7A, et les avantages de précision extrêmement élevée de la détection de phase, appliquée aux signaux du type de la figure 7B.

L'invention prévoit pour cela de constituer la source de lumière par superposition de n diodes électroluminescentes ayant des longueurs d'ondes centrales différentes, telles que celles de la figure 10, où la longueur d'onde est portée en abscisse et la densité spectrale relative est portée en ordonnée, et où chaque courbe correspond à une diode électroluminescente différente.

La superposition de ces diodes peut être obtenue:
— par multiplexage en utilisant leurs différences de longueur d'onde centrale,
— au moyen d'un coupleur, ce qui permet de ne pas tenir compte des longueurs d'onde effectives des diodes, mais introduit des pertes de flux. La modulation du profil spectral de la source constituée par la superposition de ces diodes est obtenue par réglage des courants d'alimentation des différentes diodes.

**Revendications**

1. Dispositif de détection opto-électronique à distance d'une grandeur physique, comprenant une source (10) de lumière incohérente reliée par une fibre optique d'émission (12) à un capteur (14) de type interférométrique à milieu actif biréfringent soumis à la grandeur X à détecter et dans lequel la lumière subit une modulation périodique ou quasi-périodique de son spectre, et une fibre optique (16) de réception reliant le capteur (14) à des moyens (18) d'analyse spectrale de la lumière issue du capteur, caractérisé en ce que la différence de marche introduire dans le capteur (14) entre les ondes qui interfèrent est supérieure à la longueur de cohérence de la source de lumière (10), et en ce que les moyens d'analyse spectrale comprennent un système (18) de démodulation optique statique essentiellement constitué d'un ensemble (22) d'éléments biréfringents placés entre un polariseur P et un analyseur A croisés ou parallèles, permettant d'obtenir un gradient de biréfringence le long d'une direction optique x privilégiée, un détecteur linéaire multipoints (23) à éléments photosensibles, orienté parallèlement à la direction optique x, et des circuits électroniques (24) d'acquisition et de traitement des signaux produits par le détecteur (23).

2. Dispositif selon la revendication 1, caractérisé en ce que le capteur (14) comprend une optique de collimation (26) au foyer de laquelle est placée l'extrémité de la fibre d'émission (12) et qui fournit un faisceau de lumière parallèle frappant un polariseur P suivi d'une lame (28) de matière biréfringente uniaxe taillée parallèlement à son axe, un analyseur A placé en aval de ladite lame, et une optique de sortie (30) au foyer de laquelle est placée l'extrémité de la fibre de réception (16).

3. Dispositif selon la revendication 1 ou 2, caractérisé en ce que le système de démodulation (18) comprend une optique de collimation (20) au foyer de laquelle est placée l'extrémité correspondante de la fibre de réception (16) et qui fournit un faisceau de lumière parallèle frappant le polariseur P suivi de l'ensemble (22) à gradient de biréfringence, le polariseur P et l'analyseur A étant inclinés à 45° par rapport à la direction optique x privilégiée.

4. Dispositif selon la revendication 3, caractérisé en ce que l'ensemble (18) d'éléments biréfringents comprend un prisme (34) de type Wollaston constitué de deux prismes élémentaires biréfringents (36, 38) accolés le long d'une face inclinée par rapport à la direction privilégiée x et disposés de manière croisée, une optique de reprise (40) étant éventuellement prévue entre l'analyseur A et le détecteur (23) pour former sur ce dernier une image du champ de franges d'interférence.

5. Dispositif selon la revendication 4, caractérisé en ce qu'entre le polariseur P et le prisme (34), est montée une lame (32) de matière biréfringente identique à celle du capteur de modulation (14) et dont l'axe lent est orienté comme celui du premier prisme élémentaire (36) du prisme (34) de type Wollaston.

6. Dispositif selon l'une des revendications 3 à 5, caractérisé en ce que l'ensemble (22) précité comprend deux prismes biréfringents (44, 46) de type Wollaston, qui sont disposés symétriquement par rapport à une lame demi-onde (48) achromatique sur la largeur spectrale de la source de lumière (10) pour obtenir un plan de localisation du champ de franges qui est parallèle aux faces des prismes (44, 46).

7. Dispositif selon la revendication 4 ou 5, caractérisé en ce que l'un (52) des prismes élémentaires du prisme (50) du type Wollaston est taillé avec un axe incliné par rapport à sa face d'entrée.

8. Dispositif selon la revendication 4 ou 5, caractérisé en ce que les deux prismes élémentaires (36, 38) du prisme de type Wollaston sont d'orientation identique et séparés par une lame demi-onde (58) placée entre leurs faces accolées.

9. Dispositif selon l'une des revendications précédentes, caractérisé en ce qu'un dispositif de modulation de phase est interposé entre le polariseur P et l'ensemble (22) d'éléments à gradient à biréfringence du système de modulation.

10. Dispositif selon la revendication 9, caractérisé en ce que ce dispositif de modulation de phase comprend une lame demi-onde (60) tournant autour de l'axe optique du système de modulation, et une lame quart d'onde (62) fixe dont un des axes est confondu avec la direction de polarisation associée au polariseur P.

11. Dispositif selon la revendication 9 caractérisé en ce que le dispositif de modulation de phase comprend un jeu de n lames déphasantes d'incrément $2\pi/n$ et des moyens pour fair défiler ces lames successivement entre le polariseur P et l'ensemble (22) d'éléments à gradient de biréfringence du système de démodulation.

12. Dispositif selon l'une des revendications précédentes, caractérisé en ce qu'il comprend plusieurs capteurs (14) à codage de modulation spectrale, reliés par des fibrees optiques au même système (18) de démodulation statique et multiplexés par la différence de marque optique qu'ils procurent, et un ensemble (64) de lames biréfringentes (68) identiques à celles des capteurs (14), placé dans le système de démodulation (18) entre le polariseur P et l'ensemble (22) à gradient de biréfringence et associé à des moyens pour faire défiler les lames (68) successivement entre le polariseur P et ledit ensemble (22).

13. Dispositif selon la revendication (12) caractérisé en ce que les lames biréfringentes (68) sont placés dans des logements (66) d'un disque (64) monté à rotation autour d'un axe parallèle à l'axe optique du système de démodulation (18), ce disque (64) comprenant un logement vide (70).

14. Dispositif selon la revendication 12 ou 13, caractérisé en ce que chaque lame biréfringente est une lame (72) à champ partagé, comprenant une lame circulaire (74) de base sur laquelle sont appliquées deux lames semi-circulaires (76, 78) de même épaisseur que la lame de base, l'une (76) ayant la même

EP 0 242 250 B1

orientation que la lame de base, et l'autre une orientation contraire, la ligne de jonction (80) de ces deux lames demi-circulaires étant perpendiculaire à la direction optique privilégiée x.

15. Dispositif selon la revendication 12 ou 13, caractérisé en ce que chaque lame biréfringente est une lame (82) semi-circulaire dont le bord diamètral (84) est radial par rapport à l'axe optique du système de demodulation (18) pour être amené parallèlement à direction privilégiée x, et en ce que deux détecteurs linéaires multipoints (23₁) et (23₂) du type précité sont disposés jointifs pour analyser les deux demi-champs de franges d'interférence.

16. Dispositif selon l'une des revendications précédentes, caractérisé en ce que la source de lumière (10) a une largeur spectrale modulable et est constituée par la superposition de plusieurs diodes électroluminescentes de longueurs d'onde centrale différentes, la modulation de la largeur spectrale de la source étant obtenue par réglage des courants d'alimentation des diodes.

**Patentansprüche**

1. Vorrichtung zum optoelektronischen Fernerfassen einer physikalischen Größe, mit einer Quelle (10) inkohärenten Lichtes, die durch eine Lichtleitfaser zur Emission (12) mit einem Sensor (14) interferometrischer Art mit aktivem doppelbrechendem Medium verbunden ist, welcher der Größe X zum Erfassen unterworfen ist und in welchem das Licht eine periodische oder quasiperiodische Modulation seines Spektrums erfährt, und mit einer Lichtleitfaser (16) zum Empfangen, welche den Sensor (14) mit Spektralanalyse-Mitteln (18) des von dem Sensor ausgehenden Lichtes verbindet, dadurch gekennzeichnet, daß der in dem Sensor (14) eingeführte Gangunterschied zwischen den interferierenden Wellen größer als die Kohärenzlänge der Lichtquelle (10) ist und daß die Spektralanalyse-Mittel aufweisen: ein System (18) zur optischen, statischen Demodulation, das im wesentlichen von einem Satz (22) doppelbrechender Elemente gebildet ist, die zwischen einem gekreuzten oder parallelen Polarisator P und einem Analysator A eingeführt sind, wodurch es möglich ist, einen Doppelbrechungsgradienten entlang einer bevorzugten optischen Richtung x zu erhalten, einen linearen Vielstellendetektor (23) mit photoempfindlichen Elementen, der parallel zu der optischen Richtung x ausgerichtet ist und elektronische Schaltungen (24) zum Erfassen und zum Verarbeiten der durch den Detektor (23) erzeugten Signale.

2. Vorrichtung nach Anspruch 1, dadurch gekennzeichnet, daß der Sensor (14) eine Kollimationsoptik (26) aufweist, an deren Brennpunkt das Ende der Faser zur Emission (12) angebracht ist und die ein paralleles Lichtbündel liefert, das auf einen Polarisator P, der von einer Platte (28) doppelbrechenden einachsigen Materials gefolgt ist, das parallel zu seiner Achse ausgeschnitten ist, einen stromab der Platte angebrachten Analysator A und eine Ausgangsoptik (30), an deren Brennpunkt das Ende der Faser zum Empfangen (16) angebracht ist, auftrifft.

3. Vorrichtung nach Anspruch 1 oder 2, dadurch gekennzeichnet, daß das System zur Demodulation (18) eine Kollimationsoptik (20) aufweist, an deren Brennpunkt das entsprechende Ende der Faser zum Empfangen (16) angebracht ist und die ein paralleles Lichtbündel liefert, das auf den Polarisator P auftrifft, der von dem Satz (22) mit einem Doppelbrechungsgradienten gefolgt ist, wobei der Polarisator P und der Analysator A bezüglich der bevorzugten optischen Richtung x unter 45° geneigt sind.

4. Vorrichtung nach Anspruch 3, dadurch gekennzeichnet, daß der Satz (18) doppelbrechender Elemente ein Prisma (34) der Wollaston-Art aufweist, das von zwei doppelbrechenden Grundprismen (36, 38) gebildet ist, die entlang einer bezüglich der bevorzugten Richtung x geneigten Oberfläche zusammengefügt und auf gekreuzte Weise angeordnet sind, wobei eine Aufnahmeoptik (40) gegebenenfalls zwischen dem Analysator A und dem Detektor (23) zum Bilden eines Bildes des Interferenzstreifenbereiches auf dem letzteren vorgesehen ist.

5. Vorrichtung nach Anspruch 4, dadurch gekennzeichnet, daß zwischen dem Polarisator P und dem Prisma (34) eine Platte (32) doppelbrechenden Materials angebracht ist, das mit jenem des Modulationssensors (14) identisch ist, und dessen langsame Achse so gerichtet ist, wie jene des ersten Grundprismas (36) des Prismas (34) der Wollaston-Art.

6. Vorrichtung nach einem der Ansprüche 3 bis 5, dadurch gekennzeichnet, daß der Satz (22) zwei doppelbrechende Prismen (44, 46) der Wollaston-Art aufweist, die bezüglich einer über die Spektralbreite der Lichtquelle (10) achromatischen Lambda-Halbe-Platte symmetrisch angeordnet sind, um eine Lokalisierungsebene des Streifenbereiches zu erhalten, die parallel zu den Flächen der Prismen (44, 46) liegt.

7. Vorrichtung nach Anspruch 4 oder 5, dadurch gekennzeichnet, daß eines (52) der Grundprismen des Prismas (50) der Wollaston-Art mit einer bezüglich der Eintrittsfläche geneigten Achse ausgeschnitten ist.

8. Vorrichtung nach Anspruch 4 oder 5, dadurch gekennzeichnet, daß die zwei Grundprismen (36, 38) des Prismas der Wollaston-Art eine identische Ausrichtung aufweisen und durch eine Lambda-Halbe-Platte (58) getrennt sind, die zwischen ihren zusammengefügten Flächen anbracht ist.

9. Vorrichtung nach einem der vorgehenden Ansprüche, dadurch gekennzeichnet, daß eine Phasenmodulationsvorrichtung zwischen dem Polarisator P und dem Satz (22) von Elementen mit einem Doppelbrechungsgradienten des Modulationssystems dazwischengeschaltet ist.

10. Vorrichtung nach Anspruch 9, dadurch gekennzeichnet, daß die Phasenmodulationsvorrichtung eine Lambda-Halbe-Platte (60), die sich um die optische Achse des Modulationssystems dreht und eine

9

feste Viertelwellenlänge-Platte (62) aufweist, von der eine der Achsen mit der dem Polarisator P verbundenen Polarisationsrichtung vereinigt ist.

11. Vorrichtung nach Anspruch 9, dadurch gekennzeichnet, daß die Phasenmodulationsvorrichtung einen Satz von, mit einem Inkrement von 2 π/n phasenverschiebenden Platten und Mittel aufweist, um diese Platten aufeinanderfolgend zwischen dem Polarisator P und dem Satz (22) von Elementen mit einem Doppelbrechungsgradienten des Demodulationssystems durchlaufen zu lassen.

12. Vorrichtung nach einem der vorangehenden Ansprüche, dadurch gekennzeichnet, daß sie mehrere Sensoren (14) mit einer Spektralmodulationscodierung, die durch Lichtleitfasern mit demselben System (18) zur statischen Demodulation verbunden und durch die Differenz einer optischen Markierung, die sie erlangen, einem Multiplexen unterworfen sind und einen Satz (64) doppelbrechender Platten (68), die mit jenen der Sensoren (14) identisch sind, aufweist, der in dem Demodulationssystem (18) zwischen dem Polarisator P und dem Satz (22) mit einem Doppelbrechungsgradienten angebracht und mit Mitteln verbunden ist, um die Platten (68) aufeinanderfolgend zwischen dem Polarisator P und dem Satz (22) durchlaufen zu lassen.

13. Vorrichtung nach Anspruch 12, dadurch gekennzeichnet, daß die doppelbrechenden Platten in Lagerungen (66) einer Scheibe (64) angebracht sind, die zum Drehen um eine zu der optischen Achse des Demodulationssystems (18) parallele Achse montiert ist, wobei diese Scheibe (64) eine leere Lagerungen (70) aufweist.

14. Vorrichtung nach Anspruch 12 oder 13, dadurch gekennzeichnet, daß jede doppelbrechende Platte eine Platte (72) mit einem geteilten Bereich ist, die eine kreisförmige Grundplatte (74) aufweist, an der zwei halbkreisförmige Platten (76, 78) derselben Dicke, wie die Grundplatte angelegt sind, wobei die eine (76) dieselbe Richtung wie die Grundplatte und die andere eine entgegengesetzte Richtung aufweist, wobei die Verbindungslinie (80) dieser zwei halbkreisförmigen Platten senkrecht zu der bevorzugten optischen Richtung x liegt.

15. Vorrichtung nach Anspruch 12 oder 13, dadurch gekennzeichnet, daß jede doppelbrechende Platte eine halbkreisförmige Platte (82) ist, deren Durchmesserrand (84) bezüglich der optischen Achse des Demodulationssystems (18) radial liegt, um parallel zu der bevorzugten Richtung x zugeführt zu werden und daß zwei lineare Vielstellendetektoren (23$_1$) und (23$_2$) der vorgenannten Art aneinanderliegend angeordnet sind, um die zwei Halb-Interferenzsteifenbereiche zu analysieren.

16. Vorrichtung nach einem der vorhergehenden Ansprüche, dadurch gekennzeichnet, daß die Lichtquelle (10) eine modulierbare Spektralbreite aufweist und durch die Überlagerung mehrerer Lumineszendioden verschiedener Zentralwellenlängen gebildet ist, wobei die Modulation der Spektralbreite der Quelle durch ein Einstellen der Betriebsströme der Dioden erhalten wird.  ·

## Claims

1. An opto-electronic detection device for remotely detecting a physical magnitude, the device comprising a source (10) of incoherent light connected via an emission optical fiber (12) to a sensor (14) of the interferometric type having a birefringent active medium which is subjected to the magnitude X to be detected and in which light is subjected to periodic or quasi-periodic modulation of its spectrum, and a reception optical fiber (16) connecting the sensor (14) to spectrum analyzer means (18) for analyzing the spectrum of the light from the sensor, the device being characterized in that the path length difference introduced in the sensor (14) between the interfering waves is greater than the coherence length of the light source (10), and in that the spectrum analyzer means comprise a static optical demodulation system (18) essentially constituted by a set (22) of birefringent elements placed between a polarizer (P) and an analyzer (A) which are crossed or parallel, thereby obtaining a birefringence gradient along a privileged optical direction x, a multipoint linear detector (23) having photosensitive elements and oriented parallel to the optical direction x, and electronic circuits (24) for acquiring and processing the signals produced by the detector (23).

2. A device according to claim 1, characterized in that the sensor (14) comprises collimator optics (26) having the end of the emission fiber (12) placed at the focus thereof and providing a parallel beam of light striking a polarizer (P) followed by a plate (28) of single axis birefringent material cut parallel to its axis, an analyzer A placed downstream from said plate, and output optics (30) having the end of the reception fiber (16) placed at the focus thereof.

3. A device according to claim 1 or 2, characterized in that the demodulation system (18) comprises collimation optics (20) having the corresponding end of the reception fiber (16) placed at the focus thereof and providing a parallel light beam striking the polarizer (P) followed by the birefringence gradient set (22), the polarizer (1) and the analyzer (A) being inclined at 45° relative to the privileged optical direction x.

4. A device according to claim 3, characterized in that the set (18) of birefringent elements comprises a prism (24) of the Wollaston type constituted by two elementary birefringent prisms (36, 38) stuck together along a face which is inclined relative to privileged direction x and disposed in crossed manner, connection optics (40) optionally being provided between the analyzer (A) and the detector (23) in order to form an image of the field of interference fringes thereon.

5. A device according to claim 4, characterized in that a plate (32) of birefringent material identical to that of the modulation sensor (14) is placed between the polarizer (P) and the prism (24) with its slow axis being oriented in the same way as the slow axis of the first elementary prism (36) of the Wollaston type prism (34).

6. A device according to any one of claims 3 to 5, characterized in that the said set (22) comprises two birefringent prisms (44, 46) of the Wollaston type, which prisms are disposed symmetrically about a halfwave plate (48) which is achromatic over the spectrum width of the light source (10) in order to obtain a localization plane for the field of fringes which is parallel to the faces of the prisms (44, 46).

7. A device according to claim 4 or 5, characterized in that one (52) of the elementary prisms of the Wollaston type prism (50) is cut with an axis that slopes relative to its inlet face.

8. A device according to claim 4 or 5, characterized in that both elementary prisms (36, 38) of the Wollaston type prism are identically oriented and are separated by a halfwave plate (58) placed between their stuck-together faces.

9. A device according to any preceding claim, characterized in that a phase modulation device is disposed between the polarizer (P) and the set (22) of birefringence gradient elements of the modulation system.

10. A device according to claim 9, characterized in that the phase modulation device comprises a halfwave plate (60) rotating about the optical axis of the modulation system, and a fixed quarterwave plate (62) having one of its axes coinciding with the polarization direction associated with the polarizer (P).

11. A device according to claim 9, characterized in that the phase modulation device comprises a set of $n$ phase shifting plates with an increment of $2\pi/n$, together with means for causing said plates to move successively between the polarizer (P) and the set (22) of birefringence gradient elements in the modulation system.

12. A device according to any preceding claim, characterized in that it comprises a plurality of spectrum modulation encoding sensors (14) connected by optical fibers to a common static demodulation system (18) and multiplexed by the optical path differences they provide, together with a set (64) of birefringent plates (68) which are identical to those in the sensors (14) and which are placed in the demodulation system (18) between the polarizer (P) and the birefringence gradient set (22) and which are associated with means for causing the plates (68) to move successively between the polarizer (P) and said set (22).

13. A device according to claim 12, characterized in that the birefringent plates (68) are placed in housings (66) in a disk (64) mounted to rotate about an axis which is parallel to the optical axis of the demodulation system (18), said disk (64) including an empty housing (70).

14. A device according to claim 12 or 13, characterized in that each birefringent plate is a shared field plate (72) comprising a circular base plate (74) having two semicircular plates (76, 78) of the same thickness at the base plate applied thereto, with one of the semicircular plates (76) having the same orientation as the base plate and the other of the semicircular plates having the opposite orientation, the join line (80) between the two semicircular plates being perpendicular to the privileged optical direction $x$.

15. A device according to claim 12 or 13, characterized in that each birefringent plate is a semicircular plate (82) whose diametral edge (84) extends radially relative to the optical axis of the demodulation system (18) to lie parallel to the privileged direction $x$, and in that two multipoint linear detectors ($23_1$ and $23_2$) of the above-specified type are disposed touching each other to analyze the two half fields of interference fringes.

16. A device according to any preceding claim, characterized in that the light source (10) is of modulatable spectrum width and is constituted by superposing a plurality of LEDs having different central wavelengths, with the spectrum width of the source being modulated by adjusting the feed currents to the diodes.

## FIG.1A

## FIG.1B

$$B(\sigma) \qquad \Delta(X) \quad T(\sigma) \qquad \frac{1}{2} B(\sigma) T(\sigma) \left\{ 1 + \cos 2\pi\sigma\Delta(X) \right\}$$

## FIG. 2

## FIG.3

## FIG. 4

## FIG. 5

## FIG. 6

## FIG.7A

## FIG.7B

FIG. 8

P 60 62 32 34 A

FIG. 9A

68
64
66
68
66
70
+

FIG. 9B

72
76
x
23
76
80
74 78
78

FIG. 9C

23₁
82
84
23₂

FIG. 10

1

0